# EUROPÄISCHE PATENTSCHRIFT

(11) **EP 0 574 753 B1**
(45) Veröffentlichungstag und Bekanntmachung des Hinweises auf die Patenterteilung: **22.01.1997**
(21) Anmeldenummer: 93108545.0
(22) Anmeldetag: 27.05.1993
(51) Int. Cl.: H02J 7/00, H02J 7/10

(54) **Ladeeinrichtung**
Charging device
Dispositif de charge

(30) Priorität: 19.06.1992 DE 4219999
(43) Veröffentlichungstag der Anmeldung: 22.12.1993
(73) Patentinhaber: ROBERT BOSCH GMBH, 70442 Stuttgart (DE)
(72) Erfinder: Gödecke, Friedrich-Wilhelm, Dipl.-Ing., W-3300 Braunschweig (DE); Peitz, Günther, W-3304 Wendeburg (DE); Sandhaus, Georg, Dipl.-Ing., W-3340 Wolfenbüttel (DE)

(56) Entgegenhaltungen:
- EP-A- 0 124 739
- EP-A- 0 479 249
- WO-A-90/03682
- GB-A- 2 253 312
- US-A- 4 885 523

## Beschreibung

Die Erfindung geht von einem Ladesystem nach dem Oberbegriff des Anspruchs 1 aus. Aus der EP-A 0 124 739 ist eine Schaltungsanordnung zum Aufladen eines Akkumulators bekannt, der zu einem Stromversorgungsteil eines Mobilgerätes gehört. Das Mobilgerät ist auf einer Ladestation ablegbar und mit dieser über zwei Kontakte elektrisch verbindbar. Die Ladestation besteht aus einer Spannungsversorgungsvorrichtung, einem Sende-Empfangsbaustein, einer Anordnung zur Steuerung der Ladeströme, einer Auswerteeinrichtung und einem Anzeigefeld. Die Auswerteeinrichtung ist die zentrale Steuereinheit und steuert das gesamte Ablaufprogramm. Bei Bedarf lädt es über die Anordnung zur Steuerung den Akkumulator nach. Durch das Anzeigefeld sind eingestellte Werte abrufbar und Defekte sowohl in der Ladestation als auch in dem Mobilgerät anzeigbar. Das Mobilgerät weist eine Stromerfassungsvorrichtung zur spannungs- und strommäßigen Erfassung des Ladezustandes des Akkumulators auf. Der Ladezustand wird in einem Speicherteil zwischengespeichert und über einen Sende-Empfangsbaustein des Mobilgerätes und die beiden Kontakte auf die Ladestation übertragen.

Der Erfindung liegt die Aufgabe zugrunde, eine Anzeige des Ablagezustandes Mobilgerät auf der Ladeeinrichtung abgelegt bzw. nicht abgelegt - zu realisieren, ohne die Zahl der elektrischen Leiter zwischen Ladeeinrichtung und Mobilgerät zu erhöhen und ohne merkliche Steigerung des technischen Aufwandes.

Diese Aufgabe wird durch ein Ladesystem nach dem Anspruch 1 gelöst. Damit ist der Vorteil verbunden, daß der Zustand der Ablage des Mobilgerätes auf dem Ladegerät bzw. der Entnahme des Mobilgerätes von dem Ladegerät trotz einer lösbaren Verbindung mit nur zwei elektrischen Leitern sicher angezeigt wird und daß dadurch die Ursachen für eventuelle Kontaktprobleme nicht erhöht werden.

Vorteilhafte Weiterbildungen der Erfindung ergeben sich aus den Unteransprüchen.

Besonders vorteilhaft ist eine Ladeeinrichtung, bei der die Ladeeinrichtung einen ersten, mit dem positiven Potential verbundenen Widerstand aufweist, der bei auf der Ladeeinrichtung abgelegten Mobilgerät in Verbindung mit einem dritten, an Masse liegenden Widerstand des Mobilgerätes einen Spannungsteiler bildet. Damit ist für die erste und zweite Steuerlogik eine einfache Möglichkeit zum Erkennen und Anzeigen des Zustandes "Mobilgerät auf Ladegerät abgelegt" bzw. "Mobilgerät vom Ladegerät entfernt" gegeben.

Ein Ausführungsbeispiel der Erfindung ist in der Zeichnung an Hand mehrerer Figuren dargestellt und wird im folgenden näher erläutert. Es zeigen
- Fig. 1: ein Blockschaltbild einer erfindungsgemäßen Ladeeinrichtung und eines Stromversorgungsteils eines auf der Ladeeinrichtung abgelegten Mobilgerätes,
- Fig. 2: ein Flußdiagramm für eine erste Steuerlogik der Ladeeinrichtung und
- Fig. 3: ein Flußdiagramm für eine zweite Steuerlogik des Mobilgerätes.

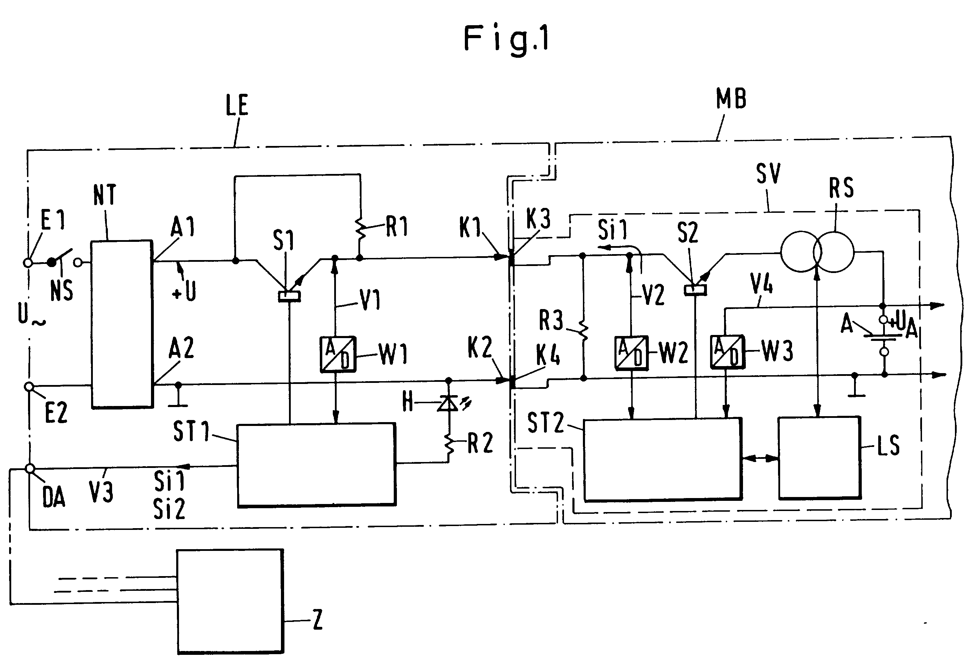

In Fig. 1 bezeichnet LE eine Ladeeinrichtung mit zwei Anschlüssen E1 und E2, die mit einem Wechselstromnetz der Spannung U_{∼} verbunden sind. Der erste Anschluß E1 steht über einen Netzschalter NS mit einem Eingang und der zweite Anschluß E2 unmittelbar mit einem anderen Eingang des Netzteils NT in Verbindung, das zwei Gleichstromanschlüsse A1, A2 aufweist. Der ein positives Potential +U führende erste Gleichstromanschluß A1 steht mit dem Kollektor eines Schalttransistors S1, zum Beispiel vom npn-Typ, in Verbindung, dessen Kollektor und Emitter durch einen ersten Widerstand R1 überbrückt sind. Der Emitter ist mit einem ersten Kontakt K1 und der zweite Gleichstromanschluß A2 mit einem zweiten Kontakt K2 verbunden. Die Kontakte K1 und K2 bilden die Ladekontakte der Ladeeinrichtung LE. Die Basis des ersten Schalttransistors S1 ist unmittelbar und dessen Kollektor über einen ersten Analog-Digital-Wandler W1 mit einer ersten Steuerlogik ST1 verbunden. Zwischen dem zweiten Gleichspannungsanschluß A2 bzw. dem zweiten Kontakt K2 und der ersten Steuerlogik ST1 liegt eine Reihenschaltung aus einem Anzeigeelement, das ist vorzugsweise eine Leuchtdiode H, und einem zweiten Widerstand R2. Ein weiterer Anschluß der Steuerlogik ST1 bildet einen Datenausgang DA der Ladeeinrichtung LE, der mit einer Zentrale Z verbunden ist. An die Zentrale Z können weitere Ladeeinrichtungen angeschlossen sein, die den gleichen Aufbau wie die Ladeeinrichtung LE nach Fig. 1 haben.

Ein auf der Ladeeinrichtung LE ablegbares Mobilgerät MB enthält ein Stromversorgungsteil SV mit einem dritten und einem vierten Kontakt K3, K4. Die Kontakte K1 und K3 bilden ein erstes Kontaktpaar und die Kontakte K2 und K4 ein zweites Kontaktpaar. Die Kontakte K1 bis K4 sind zum Beispiel Druckkontakte, die beim Ablegen des Mobilgerätes MB auf der Ladeeinrichtung LE paarweise Kontakt machen. An den dritten Kontakt K3 schließt sich der Kollektor eines zweiten Schalttranistors S2, zum Beispiel vom npn-Typ, an, dessen Kollektor über eine regelbare Stromquelle RS erstens mit dem positiven Pol eines Akkumulators A des Stromversorgungsteils SV, zweitens mit einer zweiten Steuerlogik ST2 und drittens mit der elektrischen Schaltung des Mobilgerätes MB verbunden ist. Der vierte Kontakt K4 ist mit dem negativen Pol des Akkumulators A und ebenfalls mit der elektrischen Schaltung des Mobilgerätes MB verbunden Die Kontakte K3 und K4 sind durch einen dritten Widerstand R3 überbrückt, und der dritte Kontakt K3 bzw. der Kollektor des zweiten Schalttransistors S2 ist mit der zweiten Steuerlogik ST2 verbunden. Je eine weitere Verbindung besteht zwischen der zweiten Steuerlogik ST2 über einen zweiten Analog-Digital-Wandler W2 und dem Kollektor des zweiten Schalttransistors S2 und über einen dritten Analog-Digital-Wandler W3 zu dem positiven Pol des Akkumulators A. Eine weitere Verbindung besteht zwischen der Ladesteuerung LS und dem Steuereingang der regelbaren Stromquelle RS.

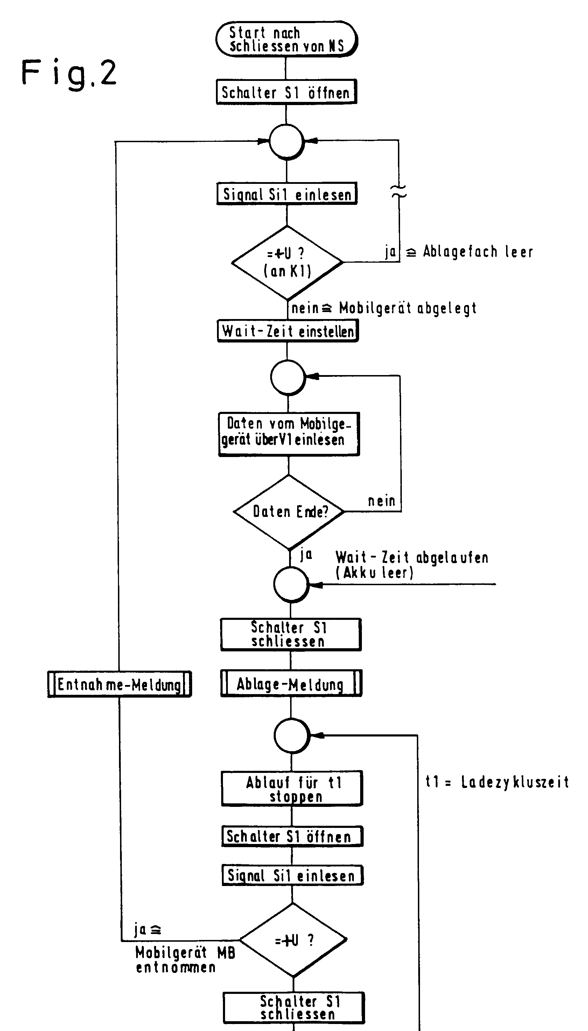

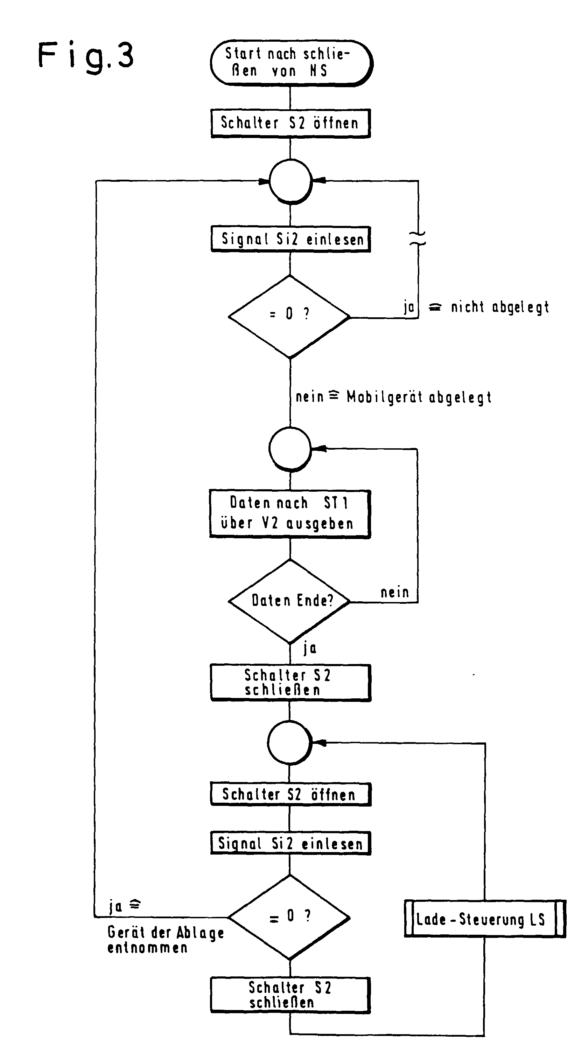

Die Wirkungsweise der vorstehend beschriebenen Schaltung wird in Verbindung mit den Flußdiagrammen in den Fig. 2 und 3 erläutert.

Zunächst wird davon ausgegangen, daß das Mobilgerät MB nicht auf der Ladeeinrichtung LE abgelegt ist, das heißt, daß die Kontaktpaare K1, K3; K2, K4 getrennt sind. Nach dem Schließen des Netzschalters NS der an der Netzwechselspannung U liegenden Ladeeinrichtung LE wird die erste Steuerlogik ST1 über den Schalttransistor S1 und den ersten Analog-Digital-Wandler W1 gestartet. In diesem Zustand liefert die erste Steuerlogik ST1 an die Basis des ersten Schalttransistors S1 keine Spannung, durch die dessen Kollektor-Emitter-Strecke hochohmig und der durch den Schalttransistor S1 gebildete Schalter geöffnet wird.

Die erste Steuerlogik ST1 erkennt dann über die Verbindung V1 und den ersten Analog-Digital-Wandler W1, daß an dem ersten Kontakt K1 positives Potential +U vorliegt. Das positive Potential +U ist ein Zeichen dafür, daß das Mobilgerät MB nicht auf der Ladeeinrichtung LE abgelegt ist. Die erste Steuerlogik ST1 zeigt diesen Zustand durch Nichtaufleuchten der Leuchtdiode H an. über die Verbindung V2 in dem Stromversorgungsteil SV und den zweiten Analog-Digital-Wandler W2 erkennt die zweite Steuerlogik ST2, daß kein positives Potential +U an dem dritten Kontakt K3 des Stromversorgungsteils SV vorhanden ist. Das ist ebenfalls ein Zeichen dafür, daß das Mobilgerät MB nicht auf der Ladeeinrichtung LE abgelegt ist.

Befindet sich das Mobilgerät MB zu irgendeiner Zeit auf der Ladeeinrichtung LE, so wird das Potential +U infolge der Spannungsteilung durch die vorzugsweise gleichgroßen Widerstände R1 und R3 halbiert. Die Steuerlogiken ST1 und ST2 erkennen dadurch, daß ein Mobilgerät MB auf der Ladeeinrichtung LE abgelegt ist. Die Steuerlogik ST1 tritt daraufhin in einen Wartezustand (wait mode) von zum Beispiel einigen Millisekunden und ist bereit, über die Verbindung V1 ein Datentelegramm von dem Mobilgerät MB zu übernehmen. Die zweite Steuerlogik ST2 kann nun ein für sie charakteristisches Identifizierungstelegramm Si1 über die Verbindung V2 und das Kontaktpaar K3 und K1 an die Ladeeinrichtung LE abgeben. Das Identifizierungstelegramm Si1 der zweiten Steuerlogik ST2 wird von der ersten Steuer logik ST1 übernommen und kann über die Verbindung V3 zu der Zentrale Z weitergeleitet werden. Die Zentrale Z erkennt somit, welches Mobilgerät MB zur Zeit auf dem Ladegerät LE abgelegt ist. Durch eine von der zweiten Steuerlogik ST2 gelieferte Vorspannung wird dann der zweite Schalttransistor S2 in den Durchlaßzustand gesteuert und die Ladesteuerung LS aktiviert. Diese steuert die regelbare Stromquelle RS, das heißt den Ladestrom für den Akkumulator A. Über die Verbindung V4 und den dritten Analog-Digital-Wandler W3 wird die Spannung U_{A} des Akkumulators A durch die zweite Steuerlogik ST2 überwacht. Bleibt das Identifizierungstelegramm Si1 in der Ladeeinrichtung LE bzw. in der Zentrale Z aus, so sendet die erste Steuerlogik ST1 nach Ablauf des Wartezustandes eine Eigenkennung Si2 an die Zentrale Z aus. Damit wird auch der erste Schalttransistor S1 durchgeschaltet und der Ladestrom für den Akkumulator A freigegeben.

Durch Aufleuchten der Leuchtdiode H der Ladeeinrichtung LE wird jetzt angezeigt, daß die Ladeeinrichtung einen Ladestrom an das Stromversorgungsteil SV des Mobilgerätes MB abgibt. Während des Ladevorganges sperren die Steuerlogiken ST1 und ST2 vorzugsweise zyklisch den Ladestrom für den Akkumulator A. Dabei wird über die Verbindung V1 durch die Steuerlogik ST1 die jeweilige Spannung +U geprüft. Die zweite Steuerlogik ST2 prüft während des Ladevorgangs über die Verbindung V2 das Potential an dem dritten Kontakt K3 des Stromversorgungsteils SV.

Bei einer späteren Entnahme des Mobilgerätes MB aus der Ladeeinrichtung LE wird der Entnahmezustand durch das mit der ersten Steuerlogik ST1 ermittelte Vorhandensein des Potentials +U an dem Kontakt K1 festgestellt; desgleichen stellt die zweite Steuerlogik ST2 den Entnahmezustand fest, wenn das Potential an dem Kontakt K3 gleich Null Volt ist. Bei einer Erkennung der Entnahme des Mobilgerätes aus der Ladeeinrichtung bewirken die Steuerlogiken ST1 und ST2, daß die Schalttransistoren S1 bzw. S2 wieder in den Sperrzustand zurückkehren.

## Patentansprüche

1. Ladessystem mit einer Ladeeinrichtung (LE), die mit einem auf der Ladeeinrichtung (LE) ablegbaren Mobilgerät (MB) mit wiederaufladbaren Akkumulator (A) zusammenwirkt, wobei die Ladeeinrichtung (LE) den wiederaufladbaren Akkumulator (A), der zu einem Stromversorgungsteil des Mobilgerätes (MB) gehört, auflädt, mit dem Mobilgerät über nur zwei elektrische Leitungen verbunden ist und ein Anzeigeelement (H) aufweist, dadurch gekennzeichnet, daß die Ladeeinrichtung (LE) eine erste Steuerlogik (ST1) zum Steuern eines ersten, im Ladestromkreis liegenden Schalters (S1), zum Feststellen, ob am Ausgang des ersten Schalters (S1) ein bestimmtes Potential (+U) vorhanden ist, und zum Steuern des Anzeigeelementes (H) zum Anzeigen des Auflage-bzw. Entnahmezustandes des Mobilgerätes (MB) in Abhängigkeit des festgestellten Potentials (+U) aufweist und daß das Mobilgerät (MB) eine zweite Steuerlogik (ST2) zum Feststellen des Potentials (+U) am Eingang eines zweiten, ebenfalls im Ladestromkreis liegenden Schalters (S2), zum Steuern des zweiten Schalters (S2) und zum Steuern einer Ladesteuerung (LS) aufweist, die eine im Ladestromkreis liegende regelbare Stromquelle (RS) in Abhängigkeit von der augenblicklichen Spannung des Akkumulators (A) steuert.

2. Ladesystem nach Anspruch 1, dadurch gekennzeichnet, daß die erste Steuerlogik (ST1) während des Ladevorgangs abwechselnd ein Öffnen und Schließen des ersten Schalters (S1) bewirkt.

3. Ladesystem nach Anspruch 1 oder 2, dadurch gekennzeichnet, daß die Ladeeinrichtung (LE) einen ersten Widerstand (R1) aufweist, der bei auf die Ladeeinrichtung (LE) aufgelegtem Mobilgerät (MB) gemeinsam mit einem im Mobilgerät (MB) vorgesehenen dritten Widerstand (R3) einen Spannungsteiler bildet.

4. Ladesystem nach einem der Ansprüche 1 bis 3, dadurch gekennzeichnet, daß in der Ladeeinrichtung (LE) vom darauf abgelegten Mobilgerät (MB) ein Identifizierungstelegramm (Si1) empfangbar ist.

5. Ladesystem nach Anspruch 4, dadurch gekennzeichnet, daß die Ladeeinrichtung (LE) mit einer Zentrale (Z) verbindbar ist, an die das Identifizierungstelegramm (Si1) weiterleitbar ist.

6. Ladesystem nach Anspruch 4 oder 5, dadurch gekennzeichnet, daß durch die erste Steuerlogik (ST1) bei Ausbleiben des Identifizierungstelegramm (Si1) des Mobilgerätes (MB) eine Eigenkennung an die Zentrale (Z) absendbar ist.

7. Ladesystem nach einem der Ansprüche 4 bis 6, dadurch gekennzeichnet, daß für die erste Steuerlogik (ST1) eine Wartezeit einstellbar ist, die für das Einlesen des Identifizierungstelegramm (Si1) benötigt wird.

8. Ladesystem nach einem der vorherigen Ansprüche, dadurch gekennzeichnet, daß die Schalter (S1, S2) Schalttransistoren sind.

9. Ladesystem nach einem der vorherigen Ansprüche, dadurch gekennzeichnet, daß die Ladeeinrichtung (LE) ein Netzteil (NT) enthält, das über einen Netzschalter (NS) mit dem Wechselstromnetz verbunden ist und die Wechselspannung gleichrichtet.

10. Ladesystem nach einem der vorherigen Ansprüche, dadurch gekennzeichnet, daß das Anzeigeelement (H) eine Leuchtdiode ist.

## Claims

1. Charging system having a charging device (LE) which cooperates with a mobile appliance (MB) which can be placed on the charging device (LE) and has a rechargeable battery (A), the charging device (LE) recharging the rechargeable battery (A), which belongs to a power supply section of the mobile appliance (MB), which charging device (LE) is connected to the mobile appliance via only two electric lines and has a display element (H), characterized in that the charging device (LE) has a first control logic circuit (ST1) for controlling a first switch (S1) situated in the charging circuit, in order to determine whether a specific potential (+U) is present at the output of the first switch (S1), and for controlling the display element (H) in order to display the replaced state or removed state of the mobile appliance (MB) as a function of the potential (+U) determined, and in that the mobile appliance (MB) has a second control logic circuit (ST2) for determining the potential (+U) at the input of a second switch (S2), likewise situated in the charging circuit, in order to control the second switch (S2) and to control a charging controller (LS) which controls a controllable current source (RS), situated in the charging circuit, as a function of the instantaneous voltage of the battery (A).

2. Charging system according to Claim 1, characterized in that during the charging operation the first control logic circuit (ST1) alternately opens and closes the first switch (S1).

3. Charging system according to Claim 1 or 2, characterized in that the charging device (LE) has a first resistor (R1) which, when the mobile appliance (MB) is placed on the charging device (LE), forms a voltage divider together with a third resistor (R3) provided in the mobile appliance (MB).

4. Charging system according to one of Claims 1 to 3, characterized in that an identification telegram (Si1) can be received in the charging device (LE) from the mobile appliance (MB) placed thereupon.

5. Charging system according to Claim 4, characterized in that the charging device (LE) can be connected to a control centre (Z) to which the identification telegram (Si1) can be relayed.

6. Charging system according to Claim 4 or 5, characterized in that in the absence of the identification telegram (Si1) of the mobile appliance (MB) the first control logic circuit (ST1) can send a self-identifier to the control centre (Z).

7. Charging system according to one of Claims 4 to 6, characterized in that a waiting time which is required for reading in the identification telegram (Si1) can be set for the first control logic circuit (ST1).

8. Charging system according to one of the preceding claims, characterized in that the switches (S1, S2) are switching transistors.

9. Charging system according to one of the preceding claims, characterized in that the charging device (LE) contains a power pack (NT) which is connected to the AC system via a mains switch (NS) and rectifies the AC voltage.

10. Charging system according to one of the preceding claims, characterized in that the display element (H) is a light-emitting diode.

## Revendications

1. Système de charge comprenant une installation de charge (LE) coopérant avec un accumulateur rechargeable (A) d'un appareil mobile (MB) posé sur l'installation de charge (LE), l'installation de charge (LE) assurant la charge de l'accumulateur rechargeable (A) qui appartient à la partie d'alimentation électrique de l'appareil mobile (MB), avec lequel l'appareil n'est relié que par deux lignes électriques, et qui comprend un élément d'affichage (H),
caractérisé en ce que
l'installation de charge (LE) comprend une première logique de commande (ST1) pour commander un premier interrupteur (S1) dans le circuit du courant de charge, afin de déterminer si, à la sortie du premier interrupteur (S1), il y a un certain potentiel (+U), et pour commander l'élément d'affichage (H) afin d'afficher l'état de dépôt ou l'état de reprise de l'appareil mobile (MB) en fonction du potentiel (+U) constaté, et
l'appareil mobile (MB) comporte une seconde logique de commande (ST2) pour constater le potentiel (+U) à l'entrée d'un second interrupteur (S2) également dans le circuit du courant de charge, pour commander le second interrupteur (S2) et une charge (LS), qui commande une source de courant réglable (RS) du circuit de courant de charge en fonction de la tension instantanée de l'accumulateur (A).

2. Système de charge selon la revendication 1,
caractérisé en ce que
la première logique de commande (ST1) assure, en alternance l'ouverture et la fermeture du premier interrupteur (S1), pendant l'opération de charge.

3. Système de charge selon la revendication 1 ou 2,
caractérisé en ce que
l'installation de charge (LE) comprend une première résistance (R1) et forme un diviseur de tension avec une troisième résistance (R3) prévue dans l'appareil mobile (MB) lorsque cet appareil mobile (MB) est posé sur l'installation de charge (LE).

4. Système de charge selon l'une des revendications 1 à 3,
caractérisé en ce que
l'installation de charge (LE) peut recevoir un télégramme d'identification (Si1) de l'appareil mobile (MB) posé sur l'installation.

5. Système de charge selon la revendication 4,
caractérisé en ce que
l'installation de charge (LE) est reliée à une centrale (Z) à laquelle peut être transmis le télégramme d'identification (Si1).

6. Système de charge selon la revendication 4 ou 5,
caractérisé en ce qu'
en l'absence de télégramme d'identification (Si1) de l'appareil mobile (MB), la première logique de commande (ST1) envoie une caractéristique propre à la centrale (Z).

7. Système de charge selon l'une des revendications 4 à 6,
caractérisé en ce que
pour la première logique de commande (ST1), le temps d'attente nécessaire pour l'enregistrement du télégramme d'identification (Si1) est réglable.

8. Système de charge selon l'une des revendications précédentes,
caractérisé en ce que
les interrupteurs (S1, S2) sont des transistors de commutation.

9. Système de charge selon l'une des revendications précédentes,
caractérisé en ce que
l'installation de charge (LE) comporte une partie de réseau (NT) qui redresse la tension alternative transmise par un commutateur de réseau (NS) relié au réseau alternatif.

10. Système de charge selon l'une des revendications précédentes,
caractérisé en ce que
l'élément d'affichage (H) est une diode lumineuse.
